# EUROPEAN PATENT APPLICATION

(11) **EP 3 935 951 A1**
(43) Date of publication of application: **12.01.2022**
(21) Application number: 20305793.0
(22) Date of filing: 09.07.2020
(51) Int. Cl.: A21D 2/26, A23J 1/00, A23K 20/147, A23K 50/10, A23K 50/30, A23K 50/50, A23K 50/75, A23K 50/80, A23L 13/40, A23L 33/185

(54) **OILSEED PROTEIN CONCENTRATE AND PROCESS FOR THE PRODUCTION THEREOF**

(71) Applicant: Avril, 75008 Paris (FR)
(72) Inventor: The designation of the inventor has not yet been filed
(74) Representative: LLR

(57) **Abstract**

A process for producing a protein concentrate from oilseed from a plant of a family selected from the group consisting of Brassicaceae, Cannabaceae, Pedaliaceae, Rosaceae, and Fabaceae, preferably Brassicaceae. The method comprises the successive steps of:
a) providing a presscake from at least partially dehulled oilseed;
b) washing said presscake by mixing it with a first hydrous-alcohol solvent to obtain a washed presscake, and eventually separating said washed presscake from said first hydrous-alcohol solvent, to obtain a washed, an eventually separated, presscake, wherein said first hydrous-alcohol solvent has an alcohol concentration ranging from 60 % to 75% w/w; and
c) washing said washed, and eventually separated presscake by mixing it with a last hydrous-alcohol solvent to obtain a protein-containing solid and separating said protein-containing solid from said last hydrous-alcohol solvent to obtain a protein concentrate, wherein the alcohol concentration of the final hydrous-alcohol solvent is about the concentration of the azeotrope.

## Description

### Field of the invention

The invention relates to a process to extract and/or concentrate proteins from oilseeds such as seeds from Brassicaceae. The invention further relates to the product thus obtained, which is suitable for applications in food or feed.

### Prior art

Oil seeds, such as rapeseed seeds, are an important source of proteins having a high nutritional value. In particular, proteins contained in some oilseeds are now widely used in the food or feed industry as, for example, food or food additives, food stabilisers, or as a major nutritious component. These proteins are usually obtained after the seeds (dehulled or not) are crushed and pressed to remove most of the oil and the residual meal, known as a presscake is extracted, generally using hexane, to recover the remainder of the oil. The residual meal from the solvent extraction contains residual hexane and is commonly known as "white flake" or less commonly as "marc" meal. The solvent is recovered from the meal for re-use before the meal is disposed of by the crusher. In the solvent recovery process, the oil seed meal is often heated to a higher temperature of about 120°C to 140° C in a procedure termed "toasting".

Hexane is obtained from petrochemical sources. It is now regarded as generally desirable to avoid using hexane in the production of foodstuff. Von Der Haar *et al.* (2014) reports that several aqueous-alcoholic protein recovery processes for the production of rapeseed protein concentrates from rapeseed flours have been described in the literature but these processes lead to products with high contents of phenolic compounds (e.g. sinapic acid and its esters), which are not suitable for applications in feed or food.

Protein concentrate using aqueous ethanol is known in respect of soybean flakes. WO 2011/161665, referring to US 5,097,017, describes the difficulties associated with the concentration of proteins from soybeans flakes using aqueous ethanol. Moreover, in the meeting report "Canola/Rapeseed Protein: Future Opportunities and Directions-Workshop Proceedings of IRC 2015 »Campbell et al. Plants (Basel) 2016 Apr 13; 5(2). pii: E17, it is stated that when applied to Canola, the use of ethanol leaching is unsatisfactory in comparison to soybean processing, because it results in lower yield, darker colour and lower purity. In McCurdy, S.M., Effects of processing on functional properties of canola/rapeseed protein. J. Am. Oil Chem. Soc. 1987, 67, 281-284 it is taught that an ethanol washing step does not provide the same advantages on canola than on soy products and that rapeseed products have lower emulsifying capacities than soy products.

As there are increased demands for proteins concentrate having particular profiles in terms of increased or enhanced digestibility, emulsifying capacity, nitrogen solubility profile, viscosity, profile and/or water holding capacity; there is a need for an oilseed protein concentrate having at least one, and preferably many, of these desirable characteristics as well as a process suitable for preparing such a protein concentrate on an industrial scale and/or providing a high yield of protein and without of the use of hexane. Furthermore, protein extraction of oilseed from the Brassicaceae, family involves specific challenges as these seeds, as opposed to other oilseeds, such as soya or sunflowers, have relatively high levels of naturally occurring small organic molecules which can be undesirable. These undesirable molecules (UM) are *inter alia* glucosinates, phytic acid and phytates, phenolic compounds (e.g. sinapic acid and its esters), oligosaccharides such as raffinose and the likes. This can be because of organoleptic considerations (i.e. colour, taste, etc.), or because of digestibility, toxicity or other causes. These challenges are compounded when the extraction is carried out on a seed meal containing up to 15 wt % , generally from 3 to 12 wt % of oil or fat as the presence of fatty compounds reduces the efficient removal of the UM during the extraction processes.

It has now been surprisingly found that the step of hexane extraction can be omitted by successive extractions with hydrous alcohol solvents having increasing alcohol concentrations for an oilseed resulting in efficient removal of the UM to provide a protein concentrates from this oilseed suitable for applications in food or feed.

### Description of the invention

It is therefore an object of the invention to provide an hexane-free method to obtain protein concentrates from oilseed from a plant of a family selected from the group consisting of Brassicaceae, Cannabaceae, Pedaliaceae, Rosaceae, and Fabaceae, preferably Brassicaceae and which can use (non-hexane) extracted meal. It is a further object of the invention to provide protein concentrates from these oilseed having at least one of the following characteristics such as increased or enhanced digestibility, emulsifying capacity, nitrogen solubility profile, viscosity profile and/or water holding capacity which are obtainable using the process of the invention and which is suitable for applications in food or feed.

According to one aspect of the invention it is provided a process for producing a protein concentrate from oilseed from a plant of a family selected from the group consisting of *Brassicaceae, Cannabaceae, Pedaliaceae, Rosaceae,* and *Fabaceae,* preferably *Brassicaceae,* said method comprising the successive steps of:
a) providing a presscake from at least partially dehulled oilseed;
b) washing said presscake by mixing it with a first hydrous-alcohol solvent to obtain a washed presscake and eventually separating said washed presscake from said first hydrous-alcohol solvent to obtain a washed, and eventually separated, presscake; and
c) washing said washed, and eventually separated, presscake by mixing it with a last hydrous-alcohol solvent to obtain a protein-containing solid and separating said protein-containing solid from said last hydrous-alcohol solvent to obtain a protein concentrate.
Such a process allows obtaining a high quality concentrate on an industrial scale.

A distinction between protein "concentrates" and protein "isolates" is made due to the production and the resulting protein content. Plant protein isolates have a very high protein content of at least 80% compared to plant protein concentrates which have a protein content between 40% and 70%. Usually, to prepare protein isolates, the proteins are dissolved in water (not comprising large amount of alcohol) and then isolated from the aqueous solution.

### OILSEED/STARTING MATERIAL

Oilseed refers to a seed from an oil plant from a family selected from the group consisting of Brassicaceae, Cannabaceae, Pedaliaceae, Rosaceae, and Fabaceae, preferably Brassicaceae. Advantageously, the oilseed used is from a genus selected from the group consisting of *Brassica, Camelina, Canabis, Sesamum, Prunus, Glycine,* and *Lupinus.* Particularly, the oilseed used is from a species selected from the group consisting of *Brassica campestris, Brassica carinata* (Abyssinian mustard), *Brassica hirta* (yellow mustard), *Brassica juncea* (Indian mustard), *Brassica napus* (rapeseed or canola), *Brassica nigra* (black mustard), *Brassica oleracea* and *Brassica rapa, Camelina sativa* (camelina), *Canabis sativa (Hemp), Sesamum indicum* (Sesame), *Prunus dulcis* (Almond), *Glycine max.* (Soybean), *Lupinus albus* (White Lupine), *Lupinus angustifolius* (Blue Lupine), preferably *Brassica napus, Brassica juncea, Brassica carinata,* and crossing thereof.

The presscake used is obtained from at least "partially" dehulled oilseed. Processing steps of oilseed dehulling are well known in the art (Laisney, 1984; Matthäus, 2012). One can use a dehuller such as a disc sheller or impact huller or roller mill. The dehulling step includes removing the hull from the oilseed. The dehulling step produces a "dehulled oilseed" or oilseed kernels. At the industrial scale, the dehulling is generally partial and such starting material is preferred. By "partially dehulled oilseed", it is meant that the oilseed have a hull content (w/w) of less than 35% w/w, preferably less than 20% w/w, preferably less than 15% w/w in particular for Brassicaceae seeds. The oilseed may be completely dehulled. The choice of such a not over-processed material allows to reduce the processing costs while achieving the required quality in the concentrate.

Oilseed kernels or dehulled seed can advantageously be cracked into smaller particles and then possibly flattened into thin flakes, especially if they are cooked before screw pressing. Processing steps of oilseed flaking are well known in the art (Laisney, 1984; Unger, 1990; Matthäus, 2012). In certain embodiments, the oilseed can be preheated before flaking at a temperature generally ranging from 30°C to 50°C. The flaking step produces a "flaked oilseed". The flaking step is achieved in a flaking mill, through flaking rolls.

### COOKING (or CONDITIONING)

According to an embodiment of the invention the dehulled oilseed can be cooked before being pressed. Processing steps of oilseed cooking are well known in the art (Laisney, 1984; Unger, 1990; Matthäus, 2012). The preliminary cooking step of the oilseed modifies the mechanical properties of the oilseed and reduces the viscosity of the oil droplets. It therefore enhances the pressing and improves the extractability of oil from the oilseed. The cooking step is achieved in a cooker. Typically, the cooking temperature is ranging from 30°C to 110°C, preferably from 65°C to 90°C and more preferably from 75°C to 88°C. This is particularly suitable to Brassicaceae seeds. The retention time in the cooker may vary for example from 20 min to 40 min.

### PRESSING

Processing steps of oilseed pressing are well known in the art (Laisney, 1984; Unger, 1990; Matthäus, 2012). The pressing process includes partially removing the oil from the oilseed, *i.e.,* removing at least 60% of the oil from the oilseed.

According to an embodiment of the invention, the pressing step of the oilseed can be a cold-pressing one, and the oilseed is preferably not cooked (as defined above) prior to its passing through the press. This embodiment allows to obtain protein extracts wherein the proteins are even closer from their natural conformation.

According to a preferred embodiment of the invention, the oilseed is preferably cooked and during the pressing step, it is preferred that the temperature of the oilseed is ranging from ambient temperature (e.g. 18°C) to 110°C, preferably to 90°C. A particularly preferred temperature range is 65°C to 95°C, especially from 68°C to 88°C. The pressing process is preferably achieved (mechanically) in a press, preferably a screw press in one (full pressing), two steps (double pressing) or more. A preferred screw press is a barrel-type screw press with vertically split cage, such as the type commercially available from CPM SKET GmbH (Germany) or the French Company OLEXA (Arras, France).

According to an advantageous embodiment of the invention, the moisture content of the oilseed at the inlet of the first press, or before the pressing, is ranging from 5% to 8%. Hence the process of the invention may advantageously include a step of moisturizing and/or drying the oilseed prior to carrying out the pressing step, in order to achieve the advantageous moisture content. A drying step can be particularly suitable when, for example, the oilseed is stored under particular cold (e.g. winter) or wet conditions.

Due to press friction during the pressing step, the temperature of the oilseed is increasing. However, the temperature of the oilseed during the pressing steps shall be maintained as of 110°C or less. As it will be understood, it is also advantageous that the temperature does not drop too low. The lower temperature limit is generally considered to be about or above room temperature, e.g. 22°C. Advantageously, the temperature within the press and/or the of resulting oilseed press cake at the press outlet is ranging from 50°C to 110°C, preferably 65°C to 88°C. The pressing step produces an "oilseed presscake" or "oilseed press cake", also named "oilseed expeller".

As aforementioned, the pressing step according to the invention can be repeated at least twice (double-pressing or more). The oilseed presscake obtained for each pressing step before the final press is called "prepress cake". The process can include intermediary thermal processes (such as drying, cooking and extruding) between, or during, each pressing operation. Drying can be achieved by applying vacuum conditions or via the circulation of warm air, at temperature ranging from 40°C to 90°C, through the prepress cake.

Optionally, the prepress cake can be extruded in a dry extruder producing a texturized extrudate at temperature ranging from 100°C to 150°C for a residence time around 30s. It is recommended to choose the temperature and the residence time such as to keep a ratio of Lysine/Protein corresponding to at least 95% (w/w) of the one of the seed.

According to a preferred embodiment of the invention the oilseed presscake that can be used in the process of the invention has an oil content ranging from 3% to 25% dry w/w. The oil content of the oilseed presscake can depend on the moisture and the temperature of the oilseed during the pressing, or the number of pressing steps, or the thermal process applied.

By way of example, the oilseed press cake can have an oil content ranging from 4% to 25% dry w/w, in particular from 5% to 14% dry w/w, and even more preferably from 6% to 13% dry w/w, (e.g. 8 to 12% dry w/w), determined by the Soxhlet extraction method (ISO734:2016). Advantageously such oil content is obtained by pressing at a temperature of 90°C or less.

According to another embodiment of the invention, the oilseed presscake obtained by double pressing with intermediary extrusion at an overall temperature of 110°C or less can have an oil content ranging from 6% to 10% dry w/w, determined by the Soxhlet extraction method (ISO734:2016).

According to another embodiment, the oilseed presscake is obtained by double pressing, in particular screw pressing, with preliminary cooking at a temperature ranging from 70°C to 110°C, preferably 80°C to 86°C, and a first pressing temperature ranging from 50°C to 110°C, preferably 67°C to 72°C, and a second pressing temperature of less than 110°C but which is higher than the first pressing temperature. This second pressing temperature may range, for example, from 80°C to 90°C, preferably from 83°C to 88°C. This oil content of such a press cake can advantageously range from 10% to 15% determined by the Soxhlet extraction method (ISO734:2016).

According to another embodiment, the oilseed presscake is obtained by double pressing, in particular screw pressing, with a first pressing temperature ranging from 50°C to 110°C, preferably 67°C to 72°C, then a cooking step of the first oilseed presscake at a temperature ranging from 70°C to 110°C, preferably 80°C to 86°C, and then a second pressing temperature of less than 110°C but which is higher than the first pressing temperature as defined above.

### HYDROUS-ALCOHOL SOLVENT EXTRACTION

The hydrous-alcohol solvent washing steps includes removing (extracting) undesirable molecules (UM) such as carbohydrates (monosaccharides, disaccharides and oligosaccharides) and antinutrients such as glucosinolates, phytic acid and phytates, and phenolic compounds such as sinapic acid and its esters, from the defatted oilseed meal. Carbohydrates include monosaccharides (such as fructose, glucose, and galactose), disaccharide(sucrose), and alpha-galactosyl derivatives of glucose, among which most common are the trisaccharide raffinose, the tetrasaccharide stachyose, and the pentasaccharide verbascose. Glucosinolates include glucoiberin, progoitrin, epiprogoitrin, glucoraphanin, gluconapoleiferin, glucoalyssin, sinalbin, gluconapin, 4-hydroxyglucobrassicin, glucobrassicanapin, glucotropaeolin, glucoerucin, glucobrassicin, gluconasturtiin and neoglucobrassicin.

According to a preferred embodiment of the invention the hydrous solvent is aqua or water. According to another preferred embodiment of the invention the alcohol solvent is a lower (C1 to C3) aliphatic alcohol, such as ethanol, isopropanol, methanol, or a mixture thereof. Ethanol and isopropanol is particularly preferred. The alcohol concentration is ranging from 60% w/w to the alcohol azeotrope (i.e. the water/alcohol azeotrope, that is -96% w/w for ethanol), preferably from 65% w/w to the alcohol azeotrope (i.e. the water/alcohol azeotrope). Advantageously, the concentration of alcohol in the solvent increases for each successive washing step. Hence, the alcohol concentration used in the solvent of the final washing step is higher than the alcohol concentration used in the first washing step. It is therefore preferred, that the first washing step be carried out using a hydrous-alcohol solvent having a concentration ranging from 60 % to 75% w/w and that the concentration of the final hydrous-alcohol solvent be higher, such as close to or about the azeotrope concentration +/- 5% (w/w), preferably +/- 2% (w/w). It is further advantageous that the concentration of alcohol of the final solvent be close, or equal, to the alcohol azeotrope, that is 96% w/w for ethanol, and 88% w/w for isopropanol.

It is further preferred that more than two washing steps be carried out. The number of washing steps is correlated with the purity of the product to be achieved. The number of washing steps can for example be up to 10, preferably up to 6. It was found that at least one additional washing step is advantageous wherein the separated washed presscake of step b) is submitted before step c) to a first additional washing step b1) by mixing it with a second hydrous-alcohol solvent and then separating it from said second hydrous-alcohol solvent. It was further found that carrying out at least another additional washing step was particularly effective to provide an acceptable protein extract at minimum costs. Therefore, the separated washed presscake of step b1) is advantageously submitted before step c) to a second additional washing step b2) by mixing it with a third hydrous-alcohol solvent and then separating it from said third hydrous-alcohol solvent.

Additionally the washing steps can be a continuous process carried out by using a conventional extractor apparatus used to extract fat from oilseeds. For example the hydrous-alcohol solvent may percolate through the oilseed presscake which is positioned on a perforated belt which travels horizontally. Miscella percolates through the belt and falls into compartments in the bottom of the extractor housing, where it is picked up by a series of pumps and recirculated counter currently at the required increasing concentration to the presscake. For another example the extraction may be carried out by using a solvent immersion extractor wherein the presscake is continuously convoyed through the extractor in counter current mode with the solvent.

When 4 washing steps are used, the alcohol concentration of the solvent can range for the first washing step from 60% to 70 % w/w, preferably about 65%w/w, from 65% to 75%, preferably about 70% w/w, for the second step, from 75% w/w to 85 % w/w, preferably 80%, for the third step, to reach 90% to 96%, preferably around 96% w/w for the final step. As aforementioned, it is further preferred that the alcohol concentration selected increases for each successive steps.

The hydrous-alcohol solvent washing step is carried by an extractor or reactor, such as an immersion extractor or a percolation extractor (e.g., shallow bed percolation extractor), preferably an immersion extractor.

In particular, the washing steps b) and c) can be carried out by using a continuous counter-current percolation extractor by increasing the alcohol concentration of the hydrous-alcohol solvent from 60% w/w to the alcohol azeotrope as defined above.

According to an advantageous embodiment of the invention, the pH of the hydrous-alcohol solvent is ranging from 3.0 to 6.5., preferably from 3.5 to 5.0, most preferably from 4.5 to 5.0 (e.g. around 4.8). In order to adjust the pH of the hydrous-alcohol solvent, a component acting as a pH regulator such as an acid or a base, can be added. For example, this component can be a base such as NaOH, Ca(OH)₂ Na₂CO₃, or an acid, such as lactic acid, citric acid, propionic acid, ascorbic acid, phosphoric acid or sodium bisulphite, preferably phosphoric acid.

According to an advantageous embodiment of the invention the temperature within the reactor (i.e. at which the washing takes place) is ranging from 50°C to 70°C, preferably 62°C to 68°C, in particular when the alcohol is ethanol or isopropanol. Advantageously the ratio between the hydrous-alcohol solvent and the presscake (or washed pressed cake, i.e. solids) is ranging from 5:1 to 13:1 w/w, preferably from 6:1 to 10:1 w/w and advantageously around 7.5:1 to 8.5:1. According to another advantageous embodiment of the invention, the resident time of the presscake with the first hydrous-alcohol solvent during the first washing step may range from 10 minutes to 90 minutes, preferably around 70 minutes. The resident time of the presscake with the hydrous-alcohol solvent other than the first hydrous-alcohol solvent can range from 10 minutes to 90 minutes, but is preferably shorter than the resident time of the first wash. For example, it can be of around 60 minutes.

When a washing step is over, the solid is then separated from the liquid by usual liquid-solid separation such as filtration, or percolation, with a meshed material, membrane or cloth (e.g. 10µm meshed material or fabric).

As it is usual the solvent and the press cake can generally be admixed together by general stirring, for example in a reactor. When the washing step is over, the solid is separated from the liquid by usual liquid-solid separation, e.g. centrifugation or percolation. It can be beneficial to use a recycled solvent (that is a solvent which is recovered from a previous washing step) for all or some of the subsequent washing steps. Alternatively, recycled solvent and fresh solvent can be both used each for a distinct wash/step. It may also be more economical to use a mixture of fresh and recycled aqueous-alcohol solvent for some or all of the steps.

### HYDROUS-ALCOHOL SOLVENT DESOLVENTIZING (DRYING)

Once the final washing step has been carried out in step c) the solvent may not only be separated from the washed presscake but is advantageously entirely removed from the obtained protein-containing solid thus obtained. The hydrous-alcohol solvent desolventizing step thus includes removing the hydrous-alcohol solvent from the washed oilseed presscake. According to a preferred embodiment of the invention the hydrous-alcohol the removal is complete, that is only traces of the last solvent (e.g. less than 1% w/w) can be found in the protein concentrate obtained. The solvent desolventizing step is carried out under partial vacuum, using, for example, a vacuum paddle dryer; a drying stove or a laminar flow hood. According to an advantageous embodiment of the invention, the resident time of the defatted oilseed meal in the desolventizer is ranging from 100 minutes to 140 minutes, preferably 120 minutes. Advantageously the temperature is lower than 80°C. For example, the temperature is ranging from 60°C to 70°C, preferably for about 120 ± 10 mins. Advantageously, the oilseed protein concentrate is dried to reach moisture content ranging from 7% to 10%, preferably around 5%. This step produces a "protein concentrate".

### SIEVING (SORTING)

The dry oilseed protein concentrate can be subjected to at least one sieving (or sorting) step optionally preceded by at least one milling or deagglomerating step. This optional sieving step allows to increasing the protein content and decreasing the fibre and/or hull content of the oilseed protein concentrate. Although the oilseed are dehulled, this dehulling is generally partial to some extent. Hence the sieving step allows removing the traces of hulls that form black spots (visible to the naked eye) in the dry oilseed protein concentrate, which may be not compatible with an application in food industry. Sieving technology is well known in the art. For example, one can use sieves or a plansifter machine, a turboseparator or a triboseparator. The increase in protein content and the reduction in fibre content of the oilseed protein concentrate can be obtained by collecting fractions having a particle size of less 500 µm, preferably of less than 250 µm, although fractions having a particle size of less than 180 µm and even less than 150 µm can be considered. The maximum particle size of the fraction is determined by the use of corresponding sieves. Advantageously the dry protein concentrate which is in a shape of a dry powder can be subsequently deagglomerated (e.g. milled) and sieved at least once. The fraction which is not small enough and is retained in the sieve may then be subjected to additional milling and sieving steps.

According to one embodiment of the process of the invention, each step a) and/or c) are only carried once.

According to one embodiment of the process of the invention, the oilseed is not flaked prior to step a).

According to one embodiment of the process of the invention, it does not comprise a microfiltration or diafiltration step.

According to one embodiment of the process of the invention, it does not comprise the use of a cyclone concentrator or a cyclone concentration step.

According to one embodiment of the process of the invention, no-hexane, preferably no alkane, is used.

A protein concentrate according to the invention which was subjected to this sieving process is a sieved concentrate. A protein concentrate which has not been subjected to this process is a non-sieved concentrate.

### OILSEED PROTEIN CONCENTRATE

Another object of the invention is an oilseed protein concentrate obtained, or obtainable, by a process of the present invention as described therein. A further object of the invention is a protein concentrate from an oilseed from a plant from a family selected from the group consisting of Brassicaceae, Cannabaceae, Pedaliaceae, Rosaceae, and Fabaceae, preferably Brassicaceae, as defined above. The protein concentrate according to the invention may have:
- a protein content from 40% to 69% on dry matter w/w, preferably from 50% to 65% on dry matter w/w, preferably from 50% to 60% on dry matter w/w (DM), such as around 55% or more w/w on DM. These values are measured according to French Standard NF EN Iso 16634 (2008);
- A mono- and di-saccharide total content of less than 1% w/w on DM, preferably less than 0.5% w/w on dry matter w/w; and
- a total oligosaccharide content of less than 1% dry matter w/w, preferably less than 0.5% on DM w/w.

Preferably the oilseed protein concentrate of the invention comprises less than 2%, preferably less than 1% , and even more preferably less than 0.5%, w/w on DM of total mono-, di- and oligo saccharides.

An oligo-saccharide is a polymer of 3 to 10 monosaccharides.

Preferably the oilseed protein concentrate of the invention comprises less than 2%, preferably less than 1% , and even more preferably less than 0.5%, w/w on DM of raffinose.

Preferably these mono- and di-saccharides are chosen in the group consisting of glucose, fructose, sucrose, lactose and maltose.

Preferably the oilseed protein concentrate of the invention comprises less than 5%, preferably less than 4%, and even more preferably less than 3%, w/w on DM of total lipids.

Preferably, the oilseed protein concentrate according to the invention has an ADL content (w/w dry matter) which ranges from 2% to 12%, preferably from 5% to 10% w/w on DM, preferably less than 9% w/w on DM, These values are measured according to French Standard NF V18-122 (2013).

Preferably, the oilseed protein concentrate according to the invention has a cellulose content (w/w dry matter) which ranges from 4% to 15%, preferably from 4% to 10%, by total weight of said fraction. These values are measured according to French Standard NF V03-040 (1993).

Preferably the oilseed protein concentrate of the invention has a low amount of glucosinolates. In particular it comprises less than 5 µmol/g on DM, preferably less than 4 µmol/g on DM, and even more preferably less than 0.2% µmol/g DM of total glucosinolates. It is more preferred that the concentrate according to the invention comprise lower amount of other UM molecules, and in particular low amounts of polyphenols and or phytic acid. Advantageously the maximum amount of polyphenols and/or phytic acid is an amount as described below.

Preferably the oilseed protein concentrate of the invention comprises less than 0.5%, preferably less than 0.2%, and even more preferably less than 0.1%, w/w on DM of total polyphenols.

Preferably the oilseed protein concentrate of the invention comprises less than 12%, preferably less than 7%, and even more preferably less than 6%, w/w on DM of total phytic acid.

Preferably, the oilseed concentrate according to the invention has a neutral detergent fibre content (w/w dry matter) which ranges from 5% to 35%, preferably 10% to 28%, on DM and more preferably less 20% w/w on DM. These values are measured according to French Standard NF V18-122 (2013).

Preferably, the oilseed protein concentrate according to the invention has an acid detergent fibre content (w/w dry matter) which ranges from 3% to 25%, preferably from 5% to 20% DM and more preferably less 15% w/w on DM. These values are measured according to French Standard NF V18-122 (2013).

Preferably, the oilseed protein concentrate according to the invention is a powder made of particles. Advantageously the size distribution of the particles presents a D₅₀ which may range from 10 µm to 300 µm, preferably from 10 µm to 200 µm. More preferably the D₅₀ ranges from 30 µm to 70 µm It is further preferred that the powder also presents a D₉₀ ranging from 50 µm to 500 µm, preferably 50 µm to 300 µm, more preferably 50 µm to 150 µm. Using a combination of the following D₅₀ and D₉₀ values 30 µm to 70 µm and 50 µm to 150 µm respectively provides particularly good results. These values are measured with Malvern equipment by laser diffraction using dry dispersion method (i.e. the particles are dispersed in air).

It is preferred that the protein concentrate of the invention has an emulsifying capacity ranging from 50 to 100ml of sunflower oil, in particular from 55 to 90 ml of sunflower oil (such as more than 75 ml of sunflower oil); the method for measuring the emulsifying capacity being described in the Examples below.

Preferably, the protein concentrate of the invention is insoluble, that is, has a protein solubility of less than 20% in an aqueous solution at a pH ranging from 3 to 8 at 25°C; the solubility being measured by the method described in the Examples (see infra).

Preferably, the protein concentrate of the invention has an apparent viscosity of at least 300 cP, advantageously at least 370 cP and most preferably at least 410 cP, at 10% protein equivalent solution (w:w) of the oilseed protein concentrate solution in water at 25°C, at a shear rate of 100 s⁻¹; the method for measuring the apparent viscosity being described in the Examples below. According to a particularly preferred embodiment of the invention the protein concentrate is a sieved concentrate. This concentrate may have a particularly low apparent viscosity. For example the viscosity can be lower than 50 cP, even lower than 20 cP at 10% protein equivalent solution.

Preferably the oilseed concentrate of the invention are thermally stable and eventually partially, or totally, denatured.

It is preferred that the protein concentrate of the invention may have a water holding capacity (WHC) of at least 3 g/g, preferably of at least 3.7 g/g, more preferably of at least 4.0 g/g; the method for measuring the WHC being described in the Examples below. The maximum WHC may be up to 4.5 g/g, preferably 6.0 g/g.

It is further preferred that the protein concentrate of the invention may have a minimum gelling concentration of at least 16 % (w/w) protein content, preferably of at least 14% and more preferably of at least 12%. USES, METHODS and COMPOSITION

The oilseed protein concentrate according to the invention can be used in the food industry or feed industry (such as the aquafeed industry, or feeding early weaned animals and newly hatched birds which have intestinal tracts that are not fully mature), in particular for preparing a food product (such as meat, bread or cake product) or feed product (such as aquafeed product).

Another object of the invention is the use of an oilseed protein concentrate above described, or a mixture thereof, as an animal feed or a food or a dietary supplement or additive for animal and/or human consumption.

Another object of the invention is the use of any one of an oilseed protein concentrate above described, or a mixture thereof, for feeding an animal.

In a particular embodiment the animal is selected from the group of fish, poultry (in particular newly hatched bird), pork, swine (including piglet), ruminant such as cattle (in particular veal), sheep and goat, rabbit and rodent.

According to a preferred embodiment, the above-referred fish belongs to the family Salmonidae more preferably the subfamily Salmonidae, most preferably to the genus Oncorhynchus spp and in a particular embodiment to the species Oncorhynchus mykiss (rainbow trout) or Oncorhynchus tshawytscha(chinnok salmon), the genus Salmo spp and in a particular embodiment to the species Salmo salar(Atlantic salmon).

According to another preferred embodiment, the above-referred fish are marine fish like European seabass (Dicentrarchuslabrax), Asian seabass (Latescalcarifer), Red sea bream (Pagrus major) and Gilt-head sea bream (Sparus aurata).

Another object of the invention is the use of any one of an oilseed protein concentrate above described, or a mixture thereof, for the manufacture of a feed or feedstuff containing them. Another object of the invention is a process for manufacturing a feed or feedstuff comprising a step of blending or mixing an oilseed protein concentrate of the invention described therein, or a mixture thereof, with an animal feed raw material, such as an oilseeds meal (such as Brassica L. and/or canola), soybean meal and grains (such as wheat, barley and maize) or a mixture thereof.

Another object of the invention is the use of any one of an oilseed protein concentrate above described, or a mixture thereof, preferably a rapeseed protein concentrate as a feed ingredient for manufacturing an aquafeed product. In a particular embodiment, said oilseed protein concentrate as defined above is used as an aquafeed ingredient for improving protein digestibility and/or fish performance and/or feed efficacy in a fish, preferably in a fish of the genus *Oncorhynchus,* more preferably in *Oncorhynchus mykiss.*

Another object of the invention is also a food product or a beverage containing an oilseed protein concentrate of the invention as above described, or a mixture thereof, and its manufacture thereof. Such a composition may be a fish diet which comprises the concentrate of the invention in a mass proportion which may range from 20 to 30% w/w in particular about 25% w/w. w, The fish diet is advantageously associated to a standard fishmeal. The fish diet of the invention can further comprise another component chosen in the group consisting of wheat meal (e.g. 15% w/w), wheat gluten (e.g. 7.5% w/w), soybean meal (e.g. 7.5% w/w), fish hydrolysates (e.g. 3.5% w/w), vitamins, minerals and a mixtures thereof..

The invention also provides the use of any one of an oilseed protein concentrate above described, or a mixture thereof, as a main component, a supplement or an additive. Hence the oilseed protein concentrate can be used according to the invention in a food product or as a food ingredient.

In particular, the oilseed protein concentrate above described has a high water holding (absorption) capacity and can therefore be used as an ingredient (e.g., a structuring agent) for preparing a meat, bread or cake product. It can also be used for substituting (at least in part) animal proteins for preparing meat-like product (see for review Kyriakopoulou et al., 2019).

The invention also provides a process of making a foodstuff, a beverage or a food supplement, by adding and/or mixing any one of an oilseed protein concentrate above described, or a mixture thereof, to other ingredients.

Another object of the invention is the use of any one of an oilseed protein concentrate above described, or a mixture thereof, as a bio-material or bio-composite, e.g. building materials.

Foregoing and other objects and advantages of the invention will become more apparent from the following detailed description, which refers to non-limiting examples illustrating the uses according to the invention.

### Brief description of the Figures

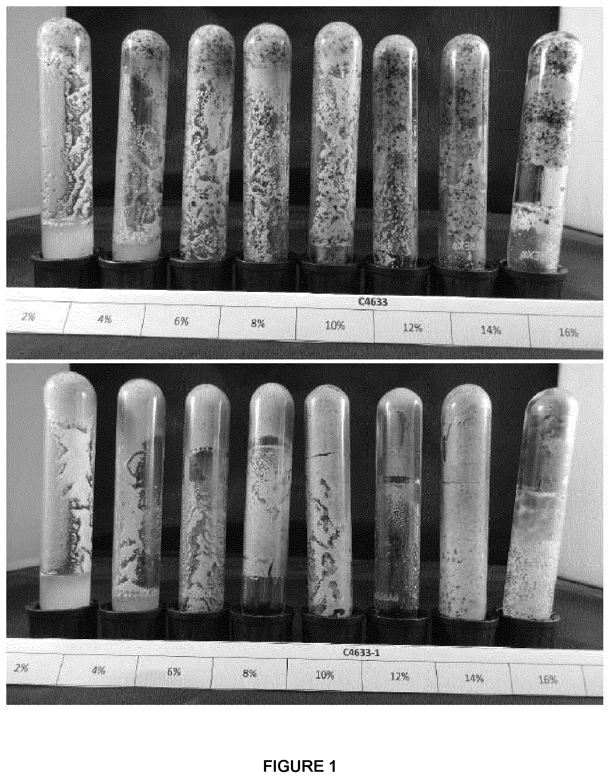

Figure 1 shows the minimum Gelling concentration of the rapeseed protein concentrate of Example 1 (top) and example 2 (bottom).

### Example 1 - Production of rapeseed protein concentrate (RPC)

The starting material was French Rapeseed and its composition is presented in Table 1

**Table 1: Analysis of the rapeseed sample.**

| Analysis | French Rapeseed |
|---|---|
| Moisture (%)^{a} | 6,8% |
| Crude Protein (% DM)^{b} | 21,0% |
| Oil Content (% DM)^{c} | 46,0% |

| | |
|---|---|
| ^{a}determined by the moisture balance method NF EN ISO 6498 (2012) ^{b}Dry Weight, or Dry Matter (DM) protein content, was determined by the Dumas method (N x 6.25) using a DUMATHERM apparatus (Gerhardt GmbH & CO KG (Germany)) (Norme AFNOR) NF EN ISO 16634-1. ^{c}determined by the Soxhlet method (ISO734:2016). | |

### Dehulling

The rapeseed was dehulled using an impact huller. The mixture (almond, hulls,) obtained was separated using a Denis D50 separator (from the French company DENIS). The following settings were used:
- Upper screen: wide open;
- Lower screen: 1 mm round;
- Front suction: 1; and
- Rear suction: 0

After hulls separation, the kernels obtained had a purity of 84%. To measure the purity, an internal image analysis method was used. This method consists in placing a sample of dehulled seeds in a scanner and capturing the image. The obtained image is processed with the image processing software *Image J.* The difference in colour or the proportion of yellow surface when compared to reference images corresponds to the kernel purity of the obtained mixture.

The mass balance in the dehulling process in given in table 2.

**Table 2**

| Dehulling step | Flow | Weight (kg) |
|---|---|---|
| Rapeseed | In | 1007 |
| Dehulled seed | Out | 713 |
| Recycled seed | Out | 102 |
| Hulls | | 174 |
| Losses | | 18 |

### Pressing

The dehulled kernels were crushed to extract the oil by using a double pressing process in semi-continuous mode using a screw press MBU75 sold by the French Company OLEXA (Arras, FR) and for the second stage a small press from the same company: MBU 20.

The rapeseed were first preheated at 80-86°C to feed the MBU75 press. For the first pressing step, the temperature within the press was stabilised at 70°C and the rotation speed was stabilised at 23 Hz. The outflow of press cake and oil was around 60-70 kg/h and 39-44 kg/h, respectively. During the second pressing step where the smaller press (MBU 20) was used, the rotating frequency was set at 26 Hz and the temperature stabilised around 86°C. In these conditions, the rapeseed cake flow rate was around 54-59 Kg/h and the oil flow rate around 8.5-10 Kg/h. The composition of the final rapeseed press cake (pressed meal) thus obtained is presented in Table 3.

**Table 3**

| Dry matter (wt %) | Fat (%/DM) | Protein content (%/DM) | Solubility (%) | Glucosinola te (µmol/g of dry solid) |
|---|---|---|---|---|
| 92.50 | 11.47 | 38.42 | 57.9 | 35.9 |

### hydrous-alcohol solvent extraction

4 different washing steps, each using a solvent having different alcohol contents, were successively carried out on the rapeseed press cake in order to extract, or purify, the proteins. These solvents were a mixture of water and ethanol having the following ethanol proportions 65%, 70%, 80% and 96% by weight. These solvent/washing steps and the key parameters for each step are presented in Table 4. 91 Kg of the Rapeseed press cake were used for extraction.

**Table 4**

| Parameters | Extraction 1 | Extraction2 | Extraction3 | Extraction4 |
|---|---|---|---|---|
| Ethanol content in solvent in wt % | 65% | 70% | 80% | 96% |
| Solvent: rapeseed press cake | 8.2:1 | 8.1:1 | 8.1:1 | 7.5:1 |
| ratio (weight) | | | | |
| Mass of solvent (Kg) | 748 | 733 | 735 | 681 |
| Extraction temperature (°C) | 65°C | 65°C | 65°C | 65°C |
| Extraction time (minutes) | 72 min. | 60min. | 60min. | 60min. |

The washing steps which are separately described below were used to remove the oil from the cake, as well as small soluble components such as polyphenols, sugars, salts etc. The washing, or extracting, steps were carried out in an agitated filter tank (Guedu - capacity 400 litres - supplier De Dietrich). This device is equipped with a vertically mobile stirrer, a jacket for hot steam, or water, circulation in order to heat the mix and a cotton cloth (De Dietrich) having a 10µm mesh allowing for liquid - solid separation. During each washing step, or extraction, step, the pressed meal was immersed in the solvent at a specific temperature, according to a determined time, and under an agitation of 21-24 rpm.

### Step 1: Ethanol 65%

The first solvent used was 65% ethanol in water. The temperature set was ranging from 55-65°C. The rapeseed press cake:liquid solvent ratio was 1:8 (w/w) and the total processing time included solvent heating was about 72 minutes. A solid/liquid separation step was then carried out by filtration (percolation).

### Step 2: Ethanol 70%

The solid from the extraction step 1 obtained was then mixed with a 70% ethanol solution according to a rapeseed press cake:liquid solvent ratio of 1:8. The temperature of this washing step was 65°C. The total processing time included solvent heating was about 90 minutes. A solid/liquid separation step was then carried out by filtration (percolation).

### Step 3: Ethanol 80%

The solid from extraction step 2 was mixed with an 80% ethanol solution according to a solid:liquid weight ratio of 1:8. The extraction temperature was around 65°C and the extraction time, including solvent heating, was 90 minutes. A solid/liquid separation step was then carried out by filtration (percolation).

### Step 4: Ethanol 96%

The solid from extraction step 3 obtained was mixed with a 96% ethanol solution according to a solid:liquid weight ratio of 1:7.5. The extraction temperature was around 65°C and the extraction time, including solvent heating, was 90 minutes. A solid/liquid separation step was then carried out by filtration (percolation).

### Desolventizing

The solid fraction obtained by filtration (percolation) from step 4 was desolventised (i.e. the solvent is removed) in the filter tank used to carry out the extraction steps (Guedu; capacity 400 litres - De Dietrich Process Systems). Upon agitation, a vacuum is applied (0.8 bar) at 53°C for more than 10 hours. A final rapeseed concentrate is thus obtained. The dry matter percentage of the obtained concentrate was 88.4%.

The mass balance of each extraction step is shown in Table 5 below:

**Table 5**

| Flux | Extraction step | 1 | 2 | 3 | 4 |
|---|---|---|---|---|---|
| in | Press cake weiqht | 91 Kq | / | / | / |
| | Solvent weight | 748Kg | 733Kg | 735Kg | 681Kg |
| Out | Miscella weight | 660Kg | 660Kg | 742Kg | 683Kg |
| | Miscella dry matter | 1,94% | 0,85% | 0,31 % | 0,57% |

### Example 2 - Dry fractionation (sieving) of the rapeseed protein concentrate obtained in Example 1

The concentrate obtained by the process of Example 1 was or deagglomerated and then sieved using a 180 microns sieve in order to obtained a protein-rich or protein containing fraction. The fiber-rich fraction is retained by the sieve and the protein-rich fraction pass through the sieve.

The protein-rich fraction obtained after sieving was analysed. The protein content of this fraction was determined as described in Example 1. It has a protein content of 55.5% on dry matter (to compare to the protein content of 51.3 % before sieving; see Example 3 below).

### Example 3 - Characterization of the rapeseed protein concentrates of the invention

### 3.1 Composition of the rapeseed protein concentrates (RPC) obtained in Example 1 and 2 (unsieved and sieved RPC)

**Table 6: Composition of non-sieved and sieved rapeseed protein concentrate**

| Analysis and method used | | **Non-sieved RPC (example 1)** | **Sieved RPC (example 2)** |
|---|---|---|---|
| Dry Matter (%) - Dessic 4h/103°C NF ISO 6496 (10/2011) | | 91.8 | 91.9 |
| Protein (%DM) - NF EN ISO 16634 (2008) | | 51.3 | 55.5 |
| Lipids (%DM) - CEE98/64 (light petroleum) 1998 | | 2.4 | 3.2 |
| Ash (%DM) - at 550°C NF v 18-101 1977 | | 9.0 | 9.0 |
| Phosphorus (%DM) - ICP microwave NF EN ISO 15621 (2012) | | 1.6 | 1.7 |
| Cellulose (%DM) - Wendee Gravimetric NF V 03-040 | | 7.8 | 8.1 |
| Neutral Detergent Fibre- NDF (%DM) - Acid hydrolysis NF V 18-122 (2013) | | 26.9 | 18.0 |
| Energy (kJ/g DM) - bomb calorimeter test | | 15.1 | 15.3 |
| Acid Detergent Fibre - ADF (%DM) - Acid Hydrolysis NF V 18-122 (2013) | | 18.0 | 10.9 |
| Acid detergent Lignin - ADL (%DM) - Meth. Acid hydrolysis NF V18-122 (2013) | | 8.7 | 3.4 |
| Glucosinolates (µmol/g DM) - dil. methanol - Internal Enzymatic method ISO 9167 - HPLC (2013) | | 3.8 | ND |
| Polyphenols (%DM) | | 0.1 | 0.1 |
| Phytic acid (%DM) - Brooks *et al.,* 2001 | | 5.3 | 5.8 |
| Arginine - HPLC - NF EN ISO 13903 (2005) | | 2.9 | 3.3 |
| Histidine - HPLC - NF EN ISO 13903 (2005) | | 1.3 | 1.5 |
| Isoleucine - HPLC - NF EN ISO 13903 (2005) | | 1.9 | 2.1 |
| Leucine - HPLC - NF EN ISO 13903 (2005) | | 3.5 | 3.9 |
| Lysine - - HPLC - NF EN ISO 13903 (2005) -react ninhydrin/ detect. 570nm. | | 3.0 | 3.3 |
| Methionine - Method XP V 18-113 NF EN ISO 13903 (2005) | | 1.0 | 1.2 |
| Phenylalanine - NF EN ISO 13903 (2005) | | 1.9 | 2.1 |
| Threonine - NF EN ISO 13903 (2005) | | 2.2 | 2.4 |
| Valine - HPLC - NF EN ISO 13903 (2005) | | 2.4 | 2.7 |
| Sugar profiles | Glucose (%/DM) | <0.2 | <0.2 |
| | Fructose (%/DM) | <0.2 | <0.2 |
| | Sucrose (%/DM) | 0.22 | 0.22 |
| | Lactose (%/DM) | <0.2 | <0.2 |
| | Maltose (%/DM) | <0.2 | <0.2 |

Total polyphenols content: measured by the following colorimetric protocol:

### Reference:

0.15g of gallic acid (from Riedel Haen, ref. 27645) mixed with 100ml of water is further diluted in 900mL of water (ratio 1/10). Then 50mL vials containing 0.0mL, 0.5mL, 1mL and 2mL of this solution are further diluted with 30mL of water. A 1mL aliquot from each vial is poured in a 50ml vial and 30ml of water are added. Then, 2.5 ml of Folin-Ciocalteu reagent (2N Sigma ref. F9252) is added to the vial and the vial is agitated. 7.5ml of a solution of sodium carbonate (20% (w:w) of anhydrous sodium carbonate) are then added. After 30 seconds, the mixture is agitated and then let to rest for 1H30mn at room temperature. The total volume is then adjusted to 100mL by adding more water to the vials. Absorbance of these solutions is measured at 765 nm using UV/VIS spectrophotometer against distilled water and a standard or calibration curve is obtained.

### Samples:

The samples are prepared by grinding each of the solid samples with a ball mill. The powder used has a maximum size of the particles of 1mm.. 1g of this powder is weighted in a 100mL vial. Close to 100mL of a mixture of MeOH/water/acetone/HC(1N), having the relative proportion 40/38/20/2, (v:v), is added to the sample. The vial's content is agitated for 1h at 60°C in a bain-marie. The total volume is then adjusted to 100mL by adding more solvent.

A 1mL aliquot from each vial is poured in a 50ml vial and 30ml of water are added. Then, 2.5 ml of Folin-Ciocalteu reagent (2N Sigma ref. F9252) is added to the vial and the vial is agitated. 7.5ml of a solution of sodium carbonate (20% (w:w) of anhydrous sodium carbonate) are then added. After 30 seconds, the mixture is agitated and then let to rest for 1H30mn at room temperature. The total volume is then adjusted to 100mL by adding more water to the vials. Absorbance of these solutions is measured at 765 nm using UV/VIS spectrophotometer against distilled water. The total phenolic content was read against the calibration curve and the results are expressed as micrograms per milliliter of gallic acid equivalents (GAE) (µg/mL of GAE) or converted on percentage. The measures are duplicated.

### 3.2 Functional characteristics: Measurement Methods

### a) Emulsifying capacity

The emulsifying capacity represents the maximum amount of oil that can be emulsified as an oil-in-water emulsion by a protein sample. A 1% (w/w) protein equivalent (PE) was prepared in water. After 1h of solubilisation by stirring in a Rheax (orbital shaker), the protein solution was centrifuged at 6000 rpm with an IKA shaker. Sunflower oil was continuously added in the solution at a flow of 50mL/min to form an oil-in-water emulsion. The amount of oil required by trigger phase inversion (formation of a water-in-oil emulsion) was assessed visually. Sodium casein is the reference for this test.

### b) Protein solubility

The protein solubility was tested on the supernatant obtained after centrifugation 15000g (10min.) of a 2% (w/w) protein equivalent solution obtained as mentioned in point a above. The solubility of the supernatant was tested at pH 3, 4, 5, 6, 7 and 8. The amount of nitrogen was measured on the supernatant obtained after centrifugation and the proportion of protein's solubilised estimated by Kjeldahl method (i.e. [protein] = 6.25 [nitrogen]).

### c) Apparent viscosity

Apparent viscosity is defined as the viscosity of a protein solution measured at a shear rate of 100 s⁻¹. A 10% or 15% (w/w) protein solution of the concentrate was prepared in water and solubilised in a Rheax (orbital shaker). Viscosity of the solution thus obtained was measured at 25°C at a shear rate of 100 s⁻¹ for 600 seconds using a Vane cup geometry on a DHR-2 rheometer (TA).

### d) Differential Scanning Calorimetry (DSC) - thermal stability

DSC is used to measure the thermal stability of a sample. A 10% (w/w) protein aqueous solution was prepared and solubilised during 1 hour in a Rheax (orbital shaker). It was then placed in a DSC cell, heated from 30°C to 140°C at a gradient of 0.4°C/min, and cooled from 140°C to 30°C at a gradient of 2.5°C/min. When an endothermic peak is observed, the following parameters are measured:
- Denaturation temperature (Td);
- Specific heat (ΔH), which is the enthalpy associated to the denaturation of protein;
- Onset temperature of denaturation (T onset);
- End temperature of denaturation (T offset)

### e) Water holding capacity

Water Holding Capacity (WHC) is the amount of water that can be bound by protein. A 2% (w/w) of ingredient is dissolved in water and the solution is and solubilised at 500 rpm during 1h. The solution was then centrifuged at 5000 g during 30 min. The amount of water in the supernatant was measured. The amount of water in pellet was deduced by difference. WHC is calculated as the mass of water held in pellet per mass of sample (g/g).

### f) Minimum gelling concentration of a rapeseed protein concentrates

Minimum gelling concentration was measured by preparing solutions of the concentrate of example 1 and 2 from 2% (w/w) protein content to 20% protein content, in increment of 2%, in test tubes (PR-18009) at pH 6. After solubilisation, the solutions were heated 1h in a water-bath at 85°C and then cooled 2h at 4°C. A solution was considered to have formed a gel if it behaved like a liquid before heating (*i.e.,* free-flowing) and did not flow when test-tube was put upside-down after heating.

### 3.2 Functional analyses

### a) Emulsifying capacity

Emulsifying capacity (oil g) for RPCs was 60mL for the sieved concentrate of Example 2 and 81mL for non-sieved concentrate of Example 1. This is respectively 12 and 9 times lower than the emulsifying capacity of sodium caseinate (774 mL).

### b) Nitrogen solubility profile

Both concentrates (example 1 and 2), with and without a sieving step, were insoluble (<20% solubility) at all pH tested.

### c) Viscosity

The apparent viscosity of a solution at 10% and 15% (w/w) solid in water at 25°C of the concentrate of Example 1 at a shear rate of 100 s⁻¹, was 436 cP and 226 cP respectively.

The apparent viscosity of a solution at 10% and 15% (w/w) solid in water at 25°C of Example 2 at a shear rate of 100 s⁻¹, was 14 cP and 141 cP.

For reference, at this shear rate, the apparent viscosity of water is 1 cP, sunflower oil 30 cP and ketchup 750 cP.

### d) DSC

No endothermic phenomenon was observed on DSC thermogram for the concentrates of Examples 1 and 2. The concentrates were therefore thermally stable. This suggests that proteins were already denatured.

### e) Water Holding Capacity

The concentrate of example 1 had a WHC (g/g) of 3.7 g/g, which means that 1g of RPC can retain 3.7 g of water.

The concentrate of example 2 had a WHC (g/g) of 4.1 g/g.

### f) Minimum gelling concentration of a rapeseed protein concentrates

The minimum gelling concentration is difficult to distinguish for both RPC as the materials are heterogeneous. At 12% total matter (6% protein content) a solid mass can be observed at the top of the tube and no liquid is observable at the bottom of the tube. No significant difference is clear between the two concentrates except their appearance (see Figure 1 wherein reference C4633 is the RPC obtained from Example 1 and C4633-1 is the sieved RPC obtained from Example 2).

### 3.3 Conclusion

The rapeseed protein concentrate obtained in Examples 1 and 2 are thermally stable, probably denatured, insoluble in water at all pH and have little emulsifying capacity. They have a very high water absorption capacity and form a highly viscous suspension. The viscosity of the RPC obtained from example 1 is higher than that of the sieved RPC obtained in example 2. Due to their functional properties, they can be used as an ingredient for making food and feed products.

### Example 4 - Manufacturing of fish diets

Ingredients: fishmeal (37.5% w/w), rapeseed protein concentrate (RPC from example 1 or sieved RPC from example 2) (25% w/w), wheat meal (15% w/w), wheat gluten (7.5% w/w), soybean meal (7.5% w/w), fish hydrolysates (for example CPSP^{®} G from Sopropeche (France)) (3.5% w/w), vitamin & mineral premix (3.5% w/w).

Diets are usually manufactured by extrusion. All powdered ingredients can be mixed in relative proportions accordingly to the target formulation in a double-helix mixer and ground (below a particle size 400 µm) in a micropulverizer hammer mill. Pelletized compounds (pellet size: 2.5 mm) are manufactured with a twin-screw extruder (model BC45, Clextral, France) with a screw diameter of 55.5 mm. Extrusion conditions: feeder rate (80-85 kg/h), screw speed (247-266 rpm), water addition in barrel 1 (345 ml/min), temperature barrel 1 (32-34°C), temperature barrel 3 (111-117°C). Extruded pellets are dried in a ventilated drying oven (35°C) before bagging.

These fish diets are satisfactory in term of protein content and nutrient digestibility in trout (*Oncorhynchus mykiss*). The rapeseed protein concentrates according to the invention used at around 25% w/w in a fish diet are a reliable alternative to soy protein concentrate, in particular for trout aquafeed. This also indicates that RPCs of the invention are very interesting raw materials for salmonid feedstuffs.

### REFERENCES

- Brooks et al., (2001), Proposed phytic acid standard including a method for its analysis. J. AOAC Int., 84: 1125-1129.
- Kyriakopoulou, K. (2019). Chapter 6: Plant-Based Meat Analogues. In: Sustainable Meat Production and Processing. Galanakis, Charis, Academic Press, ISBN 9780128148747, pp. 103-126.
- Laisney, J. (1984). L'huilerie moderne. Compagnie Française pour le Developpement des Fibres Textiles (CFDT).
- Laisney J. (1996). Chapter 9: Processes for Obtaining Oils and Fats - 1.1 General Principles of Trituration In. A. Karleskind (eds) Oils and Fats Manual (Vol. I) by A. Karleskind and J. P. Wolff, Lavoisier Publishing, pp 715-751.
- Matthäus, B. (2012). Chapter 2: Oil Technology. In: S.K. Gupta (ed.), Technological Innovations in Major World Oil Crops, Volume 2: Perspectives, New York: NY Springer Science+Business Media, LLC, pp 23-92.
- Unger, E.H. (1990). Commercial Processing of Canola and Rapeseed: Crushing and Oil Extraction. In: Shahidi F. (eds) Canola and Rapeseed. Springer, Boston, MA, pp 235-249.
- Von Der Haar, D. et al.: (2014) « Rapeseedproteins - Production methods and possible application ranges », OCL, 21(1) D104.

## Claims

1. A process for producing a protein concentrate from oilseed from a plant of a family selected from the group consisting of Brassicaceae, Cannabaceae, Pedaliaceae, Rosaceae, and Fabaceae, preferably Brassicaceae, said process comprising the successive steps of:
a) providing a presscake from at least partially dehulled oilseed;
b) washing said presscake by mixing it with a first hydrous-alcohol solvent to obtain a washed presscake, and eventually separating said washed presscake from said first hydrous-alcohol solvent, to obtain a washed, and eventually separated, presscake, wherein said first hydrous-alcohol solvent has an alcohol concentration ranging from 60 % to 75% w/w; and
c) washing said washed, and eventually separated presscake by mixing it with a last hydrous-alcohol solvent to obtain a protein-containing solid and separating said protein-containing solid from said last hydrous-alcohol solvent to obtain a protein concentrate, wherein the alcohol concentration of the final hydrous-alcohol solvent is about the concentration of the azeotrope.

2. The process according to Claim 1, wherein said separated washed presscake of step b) is submitted before step c) to a first additional washing step b1) by mixing it with a second hydrous-alcohol solvent and then separating it from said second hydrous-alcohol solvent.

3. The process according to Claim 2, wherein said separated washed presscake of step b1) is submitted before step c) to a second additional washing step b2) by mixing it with a third hydrous-alcohol solvent and then separating it from said third hydrous-alcohol solvent.

4. The process according to anyone of Claims 1 to 3, wherein the press cake of step a) has an oil content ranging from 4% to 25%, in particular from 5% to 14%, and even more preferably from 6% to 13% dry w/w.

5. The process according to anyone of Claims 1 to 4, wherein the oilseed presscake is obtained by double pressing with a preliminary cooking step carried out at a temperature ranging from 70°C to 110°C, preferably 80°C to 86°C, said double pressing being carried out using
- a first pressing temperature ranging from 50°C to 110°C, preferably 67°C to 72°C, and
- a second pressing temperature of less than 110°C but which is higher than the first pressing temperature, and in particular which can be chosen from 80°C to 90°C, preferably from 83°C to 88°C.

6. The process according to anyone of Claims 1 to 5, wherein said hydrous-alcohol solvent comprises an alcohol which is a C1 to C3 aliphatic alcohol, such as ethanol, isopropanol, methanol, or a mixture thereof.

7. The process according to anyone of Claims 1 to 6, wherein said first hydrous-alcohol solvent has a concentration in alcohol ranging from 60% w/w to the alcohol azeotrope, preferably from 60 to 70% w/w, for example about 65% w/w, and/or wherein said final hydrous-alcohol solvent has a concentration in alcohol ranging from 60% w/w to the alcohol azeotrope, preferably from 80% to the alcohol azeotrope, for example about the alcohol azeotrope.

8. The process according to anyone of claims 1 to 7, wherein at least one washing step and preferably all are carried out a temperature ranging from 50°C to 70°C, preferably 62°C to 68°C, in particular when said alcohol is ethanol.

9. The process according to anyone of claims 1 to 9, wherein said step c) comprises a desolventizing step whereby said last hydrous-alcohol solvent is completely removed from said protein-containing solid.

10. The process according to anyone of claims 1 to 9, wherein the seed are is a seed of plant of the genus *Brassica,* preferably rapeseed.

11. The process according to anyone of claims 1 to 10, wherein it further comprises at least one of the following steps prior to step a):
i) cleaning the seed,
iii) flaking the seed, and
iv) cooking the seed.

12. The process according to anyone of claims 1 to 11, wherein said protein concentrate is subjected to at least one sieving step, optionally preceded by at least one milling step.

13. An oilseed protein concentrate obtained, or obtainable, by the process of anyone of claims 1 to 12.

14. An oilseed protein concentrate said concentrate having
- a protein content from 40% to 69% on dry matter w/w, preferably from 50% to 60% on dry matter w/w (DM), such as around 55% or more w/w on DM
- a mono- and di-saccharide total content of less than 1% w/w on DM, preferably less than 0.5% w/w on dry matter w/w; and
a total oligosaccharide content of less than 1% dry matter w/w, preferably less than 0.5% on DM w/w;
wherein said oilseed is from a plant from a family selected from the group consisting of Brassicaceae, Cannabaceae, Pedaliaceae, Rosaceae, and Fabaceae, preferably the plant family is Brassicaceae.

15. Use of the oilseed protein concentrate of anyone of Claims 13 to 14, for preparing a food product, a feed product or an aquafeed product, wherein
- the food product is preferably selected from the group of meat product, bread product and cake product;
- the feed product is preferably for an animal selected from the group of fish, poultry, pork, swine, piglet, ruminant such as cattle and veal, sheep and goat, rabbit and rodent; and
wherein said aquafeed product is preferably for feeding a fish, such as rainbow trout, salmons, tilapia, striped bass, sea bass or red sea bream, preferably rainbow trout.

16. A food ingredient or a foodstuff, preferably a fish diet, which comprises the oilseed protein concentrate of Claim 13 or 14.
